# EUROPEAN PATENT APPLICATION

(11) **EP 2 085 501 A1**
(43) Date of publication of application: **05.08.2009**
(21) Application number: 08001816.1
(22) Date of filing: 31.01.2008
(51) Int. Cl.: C25B 11/04, C25B 1/04

(54) **High performance cathodes for water electrolysers**

(71) Applicant: Casale Chemicals S.A., 6900 Lugano-Besso (CH)
(72) Inventor: Sioli, Giancarlo, 22010 Cernobbio (CO) (IT); Mattone, Roberto, 21040 Vedano Olona (IT)
(74) Representative: Zardi, Marco

(57) **Abstract**

A cathode for hydrogen evolution in an electrolytic cell, comprising a metallic substrate, and a coating consisting of substantially pure ruthenium oxide, is disclosed. The inventive cathode provides enhanced performance and service life under unsteady and intermittent powering, such as powering from solar cells; a process for coating the metallic substrate is also disclosed.

## Description

### Field of the Invention

The invention relates to electrolysers for obtaining hydrogen and oxygen from water. The invention, more in detail, discloses high- performance cathodes for water electrolysers, providing high efficiency and long service life especially when used with an unstable and/or intermittent power source. The invention also relates to a process for making said cathodes.

### Prior art

Water electrolysis is a well known process to generate pure hydrogen and oxygen from water. In principle, water is decomposed into its elements by an electric current, according to the overall chemical reaction:

2 H₂O → 2 H₂ + O₂

which indicates that generation of hydrogen and oxygen takes place in a fixed volumetric ratio, i.e. one volume of oxygen every two volumes of hydrogen.

The reaction is carried out inside so-called electrolysis cells, wherein an electric field is generated between two electrodes, negative (anode) and positive (cathode), by application of an electric potential. Water, normally in the form of acqueous solution of a suitable electrolyte (such as a salt, acid or base) is subjected to electric current and the H2O molecule is split according to above reaction, evolving hydrogen at the cathode and oxygen at the anode.

Despite the apparent simplicity of the process, realization on industrial scale involves a number of technical problems, including an efficient use of the electric power, and the containment of plant costs.

Electrolysis of water is regarded as a key technology for accumulating and transporting electric power in form of hydrogen (H2). H2 is highly appreciated as a secondary energy carrier, because its combustion, or re-conversion into electric power by means of fuel cells, is practically free from noxious products. Electrolysis of water, in particular, appears as a very promising way of exploiting renewable energy sources, providing pure hydrogen which can be stored, transported, and efficiently re-converted into electric power or used as a clean fuel. Growing pollution and rising cost of the fossil fuels are strong incentive to improve this technique of water electrolysis from renewable energy. Suitable renewable energy sources include solar-photovoltaic, hydroelectric, geothermal, wind, biomass.

Most of renewable energy sources, however, have the drawback of providing unstable, intermittent power. This is the case for example of photovoltaic (PV) cells or generators powered by wind turbines, giving discontinuous and fluctuating power, strongly depending on weather conditions.

When such unstable and intermittent power is applied to conventional water electrolysers, the electrode reactions are correspondingly carried out under widely, and sometime rapidly changing polarization conditions. Consequently, the electrodes operate under stressed conditions, reaching also unusual potential ranges, causing severe corrosion and even destruction of the electrode surfaces, substrates and supporting structures. It has been claimed that the attack on the anode side is of a mechanical nature, while cathodes are subject to chemical corrosion.

Several kinds of electrode materials have been proposed with the aim to reduce or solve the above technical problem of severe degradation of electrodes of water electrolysers under variable polarization conditions. Generally speaking, it is known to realize electrodes with a metallic substrate covered by a thin layer of activating material, aiming to reduce the over-voltage of the hydrogen evolution connected to the electrode reaction. Coated electrodes are disclosed e.g. in DE-A-3612790.

More in detail, a known way to protect anodes is an electrochemical plating procedure covering the catalyst grains, deposited on a nickel substrate, by a porous, protecting coating. A further anodic material, valuable for relatively long-term stability, is cobalt. Nickel anodes, coated with mixtures of NiO and Co3O4, or NiCo2O4, are known as promising materials. According to known data, Raney Nickel and Co3O4 mixtures, deposited by vacuum plasma spray, proved to be stable during long-term tests under intermittent operation.

Cathodes protection, on the other hand, is very problematic.

Raney nickel coatings, as popular for water electrolysis in steady-state conditions, have demonstrated to be efficient under variable polarisation, but only until traces of the metal associated to nickel in the initial alloy (generally Al or Zn) are present. As it is known, in the preparation of Raney nickel, after the deposition of the Ni-Al, or Ni-Zn alloy on the substrate, the alloyed metal is leached away with alkali, leaving a particularly porous nickel metal. According to some authors the residual, un-leached Al or Zn is providing the cathode a relative good stability, until it is carried away by the caustic electrolyte. This type of cathode is evidently of very scarce interest, because its service life is limited.

It has been claimed that stability of Raney nickel can be increased, when stabilised by molybdenum addition, i.e. by adding pure molybdenum powder to the pre-formed Ni-Al alloy under plasma-spray technique. Said technique however is very expensive and, moreover, during electrolysis Mo also tends to be progressively removed from the alloy.

Noble metals have also been tested: a Ni/Al/Pt alloy exhibits very good initial over-voltage data, while Pt is not able to prevent the decomposition of the alloy, after the total removal of Al. Moreover, these electrodes are very expensive, since they require a relatively high amount of Pt. Platinum has been also dispersed by galvanic technique and in small quantities (from 1 to 2 g/m2) in Ni electrodes, showing very good results in long-term runs, under simulation of day-night power cycles, as provided by typical solar-photovoltaic plants. Nevertheless the restriction is that they must be put under protecting polarization voltage when the power is cut off, a provision which requires undesired power expenses.

Summarizing, the known art does not provide a reliable and cost-effective solution to the problem of cathode protection in water electrolysers under unstable and/or intermittent electric power.

### Summary of the Invention

The technical problem underlying the invention is to solve the above limitations of the prior art, i.e. to protect the cathode of a water electrolyser from damages due to rapid and wide polarization changes, in order to enhance performance and service life of an electrolyser operating with an unstable and/or intermittent power supply.

This is accomplished by a novel type of cathode for hydrogen evolution in an electrolytic cell, the cathode comprising:
- a metallic substrate, and
- a coating layer provided on said substrate, consisting of substantially pure ruthenium oxide.

The term substantially pure ruthenium oxide is used to mean ruthenium oxide without alloyed or added elements. According to the invention, the substrate has no further coating layers, i.e. said coating layer of substantially pure ruthenium oxide, in use, is in contact with an electrolyte of said electrolytic cell.

According to a preferred realization, said coating layer is a thin layer in the range from 0.1 to 2 mg/cm2; more preferably from 0.4 to 1 mg/cm2.

The electrode substrate may be in the form of a plate, or sheet, perforated or expanded, or of a greed, depending on the configuration of the selected electrolytic cell. The material of the electrode substrate is an electrically conducting material, advantageously chosen between the group consisting of mild steel, steel alloys, nickel and nickel alloys.

The cathode according to the invention is specifically useful for the water electrolysis process carried out in alkaline medium.

The invention also relates to an electrolysis cell comprising said cathode, and to an electrolyser comprising electrolysis cell(s) with said cathode.

According to the invention, an electrolyser to produce hydrogen comprises a suitable number of electrolytic cells, each cell having a cathode with ruthenium oxide (RuO2) coating as defined above, and is preferably powered by a renewable energy source such as solar or wind.

Another aspect of the invention is the use of substantially pure ruthenium oxide for coating a metallic cathode of an electrolytic cell, for hydrogen evolution in said electrolytic cell. The invention in particular discloses the use of substantially pure ruthenium oxide as coating material of cathodes, for enhancing performance of the electrolytic cell under unsteady and intermittent powering, e.g. when the cell is powered by a renewable energy source such as solar or wind source, which typically provides intermittent and fluctuating power output.

An aspect of the invention, hence, is a method of producing pure hydrogen from water, by electrolysis of an alkaline acqueous solution in a suitable unit comprising at least an electrolytic cell, wherein hydrogen is collected at the cathode and the cathode comprises a metallic substrate, and a coating of substantially pure ruthenium oxide. The cell is preferably powered by a renewable energy source. With the term "renewable energy source" it is made reference to any one of solar-photovoltaic, hydroelectric, geothermal, wind, biomass or other renewable source. Preferred application is with solar-photovoltaic or wind.

The invention also relates to a process for making a cathode according to the above, by applying to the surface of said metallic substrate an appropriate solution of a precursor of said ruthenium oxide coating.

Said precursor can be in the form of a soluble salt, to be transformed later into oxide form. The solution of the precursor is advantageously prepared by dissolving ruthenium chloride, preferably in the form of hydrated trichloride RuCl3.nH2O in an alcoholic solution, preferably based on iso-propanol or 2-propanol, added by distilled water and by aqueous hydrochloric acid.

The coating of the metallic substrate by ruthenium oxide is also called activation of the substrate. In a preferred embodiment of the invention, the process of activation of the substrate basically includes four steps, namely:
a) pre-treating said metallic substrate;
b) preparing an activating solution by dissolving an appropriate precursor of ruthenium oxide in a solvent;
c) applying said activating solution on the metallic substrate;
d) providing a final thermal treatment to fix the coating on the metallic substrate.

Preferably, the pre-treating includes de-greasing and cleaning the metallic surface. According to other preferred aspects of the invention, the activating solution is prepared by dissolving an appropriate precursor of ruthenium oxide in a solvent; and application is carried out by repeated steps, with intermediate steps of dripping away the excess of solution, if necessary, and drying the partially-coated cathode. The number of steps is preferably between 5 and 15.

More preferred details of the above process steps are the following. The metallic substrate is de-greased and cleaned following a surface preparation by sand-blasting or chemical etching; the activating solution is prepared by dissolving ruthenium chloride, preferably in the form of hydrated trichloride RuCl3.nH2O in an alcoholic solution, preferably based on iso-propanol or 2-propanol, added by distilled water and by aqueous hydrochloric acid.

The precursor solution is applied by means of a *per* se known method, such as immersion of the pre-treated substrate into the solution, brushing, or spraying said solution onto the substrate, the best procedure being selected depending on the size and/or form of the cathode. The application is then repeated, preferentially on both faces of the cathode, until a stated amount of activating substance has been deposited on the substrate; between consecutive repetitions of the application as described, if necessary, excess of solution is left to drip away, or is eliminated by a gentle air blowing.

The substrate, with the applied layer of solution, is dried in an oven after each application step. Drying is carried out with hot air at 150-350°C, preferably 250-300°C, and for a drying time of a few minutes, normally 3 to 12 min. The cathode is then extracted, and is left to cool down before the next solution application. In order to reach an adequate productivity, many cathodes may be carried together in the oven by a suitable supporting frame.

The number of solution application repetitions is chosen depending on the nature of the surface, or design of the component used as substrate, until the desired amount of activating material, expressed as weight per unit surface of the finished component, has been deposited.

The final, thermal treatment of the electrode is made in an oven, the same already used during the repeated applications of the activating solution, or in a separate one. The cathodes are left in the oven, under moderate hot air circulation, for a time duration of 1 to 2 hours, at a temperature of 250-400°C, preferably 300-350°C.

After completion of the thermal treatment, and according to a preferred realization, the increase in weight of the electrode component constituting the substrate corresponds to a deposition of activating material in the range from 0.1 to 2 mg/cm2, even preferably from 0.4 to 1 mg/cm2 of activated surface.

The cathode of the invention (hydrogen evolution electrode) surprisingly provides a very good power efficiency and long-term duration under wide and quick power fluctuations, as provided by most renewable energy sources. Furthermore, the inventive cathode has been found to provide superior efficiency in the process of alkaline water electrolysis, even under steady conditions. Another advantage is that there is no need of application of a protecting polarization voltage when the power source is cut off.

The above disclosed process for manufacturing the cathode has also the advantage of a low cost, which makes it adequate for commercial scale applications.

The invention also provides a reliable and cost-effective method for obtaining clean hydrogen (H2) by decomposing water (or a suitable acqueous solution) using renewable energy sources.

Detailed examples, illustrating some typical embodiments of the invention, are given below with a non-limiting purpose.

### Detailed description of preferred embodiments.

### EXAMPLE 1

A water electrolysis unit has been used with a cell stack comprising 60 bipolar cells, accommodating electrodes of 100 cm2 operating surface. Electrodes, having circular shape, are cut out from a finely perforated, nickel sheet 0.2 mm thick. Perforations have 0.5 mm diameter, and 1 mm triangular pitch. In each cell cathode and anode are separated by the interposition of a diaphragms in polysulphone cloth 0.5 mm thick. Thin nylon nets are interposed between each electrode and the diaphragm. Bipolar cells are separated each other by bipolar plates in nickel sheet 0.5 mm thick. Electrodes are kept in good contact with bipolar plates by current collectors in nickel.

The cell stack is included in a system providing a steady circulation of a potassium hydroxide aqueous solution, of 26% strength, across the stack itself, at controlled temperature.

Anodes are made of pure nickel, de-greased and cleaned by means of a solvent brushing followed by drying and short etching in hydrochloric acid solution.

Cathodes have been prepared by cleaning of the substrate as described for the anodes, an then poured into the activating solution.

The solution has been prepared starting from 36.5 grams of hydrated ruthenium chloride, of 41.55% Ru content, dissolved at room temperature, and under mechanical stirring into 1 liter of iso-propanol, to which 10 ml of 25% hydrochloric acid solution and 100 ml of water were also added. The solution has been maintained under stirring for 30 minutes. These conditions were chosen to guarantee the complete dissolution of the Ru salt, and the stability of the obtained solution.

The pre-treated cathodes have been kept into the solution for about 1 minute, inserted in a support accommodating a set of 10 of them in vertical position, left to drip off the excess of solution for some minutes over an adequate flat vessel, and then introduced in an oven, at 270°C for 10 minutes, under slight air circulation. At the end of this operation, the support with the cathodes set has been extracted from the oven, and left to cool down in open air, at room temperature.

The solution application, and the step of drying it in the oven, with successive cooling, has been repeated 6 times. Thereafter the support, carrying the set of 10 cathodes, has been thermally treated in the oven, where the temperature has been controlled at 320°C, under moderate air circulation, for a time duration of 1.5 hours, followed by extraction of the support and cooling in open air.

At the same time other 5 sets of 10 cathodes have been prepared by the same procedure.

Weighing of the cathodes at completion of the treatment demonstrated an increase of weight corresponding to a deposition, on the substrate, of 0.8 mg/cm2 of activating material, referred to the rated 100 cm2 of electrode, but distributed on both the opposite faces of each cathode.

The 60-cell stack has been assembled by inserting the anodes and the cathodes, prepared as described, in the cell frames. The stack has been installed in the water electrolysis unit, providing all functions of circulating the electrolyte, controlling the process temperature, separating the generated gases from the electrolyte, and keeping the desired operating pressure.

The following table 1.1 collects the recorded and calculated operating data.

**Table 1.1**

| set DC flow (A) | electrolyte temperature (°C) | calculated current density (A/m2) | measured stack voltage (V) | calculated ave. cell voltage (V) |
|---|---|---|---|---|
| 20 | 80 | 2000 | 98.2 | 1.637 |
| 30 | 70 | 3000 | 105.4 | 1.757 |
| 30 | 80 | 3000 | 102.7 | 1.712 |
| 40 | 60 | 4000 | 111.0 | 1.850 |
| 40 | 70 | 4000 | 108.8 | 1.813 |
| 40 | 80 | 4000 | 106.6 | 1.777 |
| 60 | 80 | 6000 | 111.7 | 1.862 |

The observed stack voltages, as well as the related average cell voltages, correspond to power efficiencies which are substantially higher than efficiency of alkaline electrolysers of the known art.

This statement is proved for instance by the following comparative example. Table 1.2 reports data of the same electrolyser described above, equipped with a cell stack of the same kind, while fitted with cathodes activated by deposition of a commercial Raney Nickel coating, obtained by flame-spray deposition on the Ni cathode substrate of the Raney Al-Ni alloy, leaching out thereafter aluminum by boiling in KOM solution.

**Table 1.2**

| set DC flow (A) | electrolyte temperature (°C) | calculated current density (A/m²) | measured stack voltage (V) | calculated ave. cell voltage (V) |
|---|---|---|---|---|
| 20 | 80 | 2000 | 118.5 | 1.975 |
| 30 | 80 | 3000 | 124.3 | 2.072 |
| 40 | 80 | 4000 | 128.1 | 2.135 |

### EXAMPLE 2

A water electrolysis unit is based on a cell stack comprising 48 bipolar cells, accommodating electrodes of 600 cm2 operating area. Electrodes, having circular shape, are cut out from an expanded nickel sheet 0.2 mm thick, having lozenge-shaped openings characterized by a transverse pitch of 1.3 mm, longitudinal pitch of 0.65 mm, advancement of 0.25 mm.

Electrolysis cells have zero-gap configuration, this meaning that in each cell anode and cathode are in direct contact with the opposite faces of the cell diaphragm, which is Zirfon® material of 0.6 mm thickness. Electrodes are kept into contact with bipolar plates through current collectors in nickel.

The cell stack is crossed by a potassium hydroxide aqueous solution, of 30% strength, kept circulating at controlled temperature by a gravity system.

Anodes are in pure nickel, de-greased, sand-blasted by means of crystalline silica of conventional S/6 brand, finally cleaned by a jet of compressed air.

The preparation of cathodes took place with the same treatment described for the anodes, before being painted on the two faces, by means of a soft brush, with the activating solution. This was prepared in the volume of 2.7 liters, starting from 100 grams of commercial hydrated ruthenium chloride, at 41% Ru content, and adding sufficient iso-propanol, 270 ml of distilled water and 27 ml of 25% HCl solution.

The cathodes have been inserted in a support accommodating a set of 24 of them in vertical position. After dripping off the excess of solution, they have been introduced in an oven, kept at 300°C, where they have been dried for 6 minutes under slight air circulation. At the end of this operation the support with the cathodes set has been extracted from the oven, and left to cool down in open air, at room temperature.

The solution application, and the step of heating in the oven, with successive cooling, has been repeated 8 times.

Thereafter the support carrying the cathodes has been put on the belt of a continuous oven, wherein the residence time was in the range of 2 hours, at temperature of 350°C, under moderate air circulation. At the oven exit the set of cathodes was left to cool down in the open air.

At completion of the thermal treatment the average weight increase of a single cathode was 430 mg, equivalent to 0.36 mg/cm2 of total effective cathode surface (considering the two opposite faces), or about 0.72 mg/cm2 if referred to the cathode area.

The 48-cell stack has been assembled by inserting in the cell frames the anodes and the cathodes, prepared as described.

The water electrolysis unit accommodating the cell stack is providing all the necessary functions and supervising all process parameters, as process temperature, pressure, liquid levels, gas analysis.

The cell stack is powered by direct connection to a 30 kWp-rated solar-photovoltaic field, comprising 300 PV panels, connected in 100 strings of 3 panels in series each. The maximum DC flow is in the range of 300 A, which corresponds to a cell peak current density of 5000 A/m2.

When the DC flow input is reduced below 30 A, the power to the electrolyser is automatically put off, to avoid the generation of not sufficiently pure hydrogen. Consequently it happens that not only during the night, but also during the daylight, due to clouds reducing the solar radiation, the power to the cells may be cut off. The cell powering is automatically re-started when the radiation produces enough DC flow (>30 A).

During a period of 30 days operation, mid April-mid May time, at 41.5°N latitude, a total 72 interruptions of the DC flow have been recorded, with a maximum of 45 peaks of various intensity in a single day.

Average data recorded at various DC flows, at various times during the initial running days and, respectively, at the end of the running period, selected in correspondence to an electrolyte temperature of 70±1 °C, at constant 15 bar pressure, have been ordered in the following table 2.1.

**Table 2.1**

| | initial running days | | end of running period | |
|---|---|---|---|---|
| instantaneous DC flow (A) | cell stack voltage (V) | average cell voltage (V) | cell stack voltage (V) | average cell voltage (V) |
| 30 | 71.5 | 1.49 | 71.7 | 1.49 |
| 90 | 76.3 | 1.59 | 76.6 | 1.60 |
| 120 | 78.7 | 1.64 | 79.1 | 1.65 |
| 240 | 85.0 | 1.77 | 85.4 | 1.78 |
| 300 | 88.3 | 1.84 | 89.3 | 1.86 |

The results demonstrate a good stability of performance.

### EXAMPLE 3

A laboratory experiment has been set up by means of a cell stack comprising 10 electrolysis cells of bipolar type, having 100 cm2 electrode area. The stack has been installed on an electrolysis testing bench capable of supplying DC flows up to 120 A through a power supply simulator, able to reproducing, compressed in a 20-minutes time span, the power output of a wind turbine, recorded in a 24-hours time span. In fact, the power output of a wind turbine may be much more variable with time than the output of a solar-photovoltaic field, inducing highly variable loads in the electrolytic cells, with corresponding stresses. The instantaneous load included excursions in the entire DC flow field, comprising automatic interruptions when the DC flow was falling below 5 A, to avoid the production of impure hydrogen. In the considered period the load interruptions resulted to be 4.

The electrode substrate was the same, sand-blasted as in Example 2 above, but the precursor application technique was different.

Anodes were activated by deposition of a cobalt oxide (Co3O4), while cathodes activation was carried out by application of an activating solution prepared, with the procedure of the previous examples, by means of a 0.15 M hydrated ruthenium trichloride solution (cat. Fluka 84050) in 2-propanol (cat. Fluka 59300). The application was made by air-spraying of the solution onto both faces of each cathode.

After a gentle air blowing, intended to remove the excess of solution from the cathodes, these were accommodated in a support, and introduced for 5-6 minutes in a muffle, kept at 330°C.

The application of the solution and the heating in the muffle were repeated 8 times, leaving finally the support with cathodes for 1 hour time at 330°C.

The average weight increase of a single cathode, due to the activation, was 105 mg.

After installation inside the electrolytic cells, and assembling of the cell stack, the system was filled up with 30% strength KOH solution as electrolyte, kept in adequate circulation.

The DC flow generated by the wind turbine simulator was applied to the cell stack, repeating consecutively, for 50 continuous days, the daily load diagram, compressed as explained above. This means that in 24 hours the cycle was repeated 72 times, for a total of 3600 repetitions, simulating about 10 years operation of the unit. The total DC load interruptions were in number of more than 14.000.

No protection polarization voltage was applied to the cells during DC flow interruptions.

The process pressure was kept constant at 10 bar for the whole period. The temperature was left fluctuating as a result of the current density variations, limiting it by cooling only in the case it was reaching 85°C.

The evaluation of the cathodes efficiency has been done by comparison of the electric characteristic of the stack at the beginning, and at the end of the test. Measurements were in steady-state conditions, 80±2°C temperature, 10 bar pressure, 30% KOH electrolyte. The results follow:

| | start of test | | end of test | |
|---|---|---|---|---|
| set DC flow (A) | measured stack voltage (V) | average cell voltage (V) | measured stack voltage (V) | average cell voltage (V) |
| 20 | 16.0 | 1.60 | 17.4 | 1.74 |
| 30 | 16.6 | 1.66 | 18.3 | 1.83 |
| 40 | 17.2 | 1.72 | 19.0 | 1.90 |

As shown, the efficiency of the cells has decreased during the entire testing period, while the decrease has been limited in an acceptable way for any commercial application.

## Claims

1. A cathode for water electrolysis in an electrolytic cell, the cathode comprising:
- a metallic substrate, and
- a coating layer provided on said metallic substrate and consisting of substantially pure ruthenium oxide.

2. A cathode according to claim 1, wherein said coating is in the range from 0.1 to 2 mg/cm2; preferably from 0.4 to 1 mg/cm2.

3. A cathode according to claim 1 or 2, wherein said metallic substrate is made of a selected material between mild steel, steel alloys, nickel and nickel alloys.

4. A cathode according to any one of claims 1 to 3, said cathode being in a selected form between the following: plate, perforated or expanded sheet, greed.

5. An electrolytic cell for electrolysis of water, comprising at least an anode and a cathode, the cathode being in accordance to any one of claims 1 to 4.

6. An electrolysis unit for producing pure hydrogen from electrolysis of water, said unit comprising at least an electrolytic cell according to claim 5.

7. Use of substantially pure ruthenium oxide for coating a metallic cathode of an electrolytic cell for electrolysis of water, for enhancing performance of said electrolytic cell under unsteady and intermittent powering.

8. Use of substantially pure ruthenium oxide as in claim 7, said unsteady intermittent powering being supplied from a renewable energy source.

9. A method of producing hydrogen (H2) from water, said method comprising the step of providing electrolysis of an alkaline acqueous solution in at least one electrolytic cell, wherein hydrogen is collected at the cathode, said cell comprising cathode(s) according to any one of claims 1 to 4.

10. A method of procuding hydrogen according to claim 9, said electrolytic cell being powered by a renewable energy source.

11. A process for making a cathode according to any one of claim 1 to 4, said process comprising at least the steps of:
a) pre-treating said metallic substrate;
b) preparing an activating solution by dissolving an appropriate precursor of ruthenium oxide in a solvent;
c) applying said activating solution on the metallic substrate;
d) providing a final thermal treatment to fix the coating on the metallic substrate.

12. A process according to claim 11, wherein step b) is carried out by dissolving ruthenium chloride in an alcoholic solution.

13. A process according to claim 12, wherein said ruthenium chloride is hydrated trichloride RuCl3.nH2O, and said solution is based on iso-propanol or 2-propanol, added by distilled water and by aqueous hydrochloric acid.

14. A process according to any one of claims 11 to 13, wherein said step c) is carried out by a sequence of applications of activating solution to the metallic substrate, each application being followed by intermediate steps of dripping excess of solution from the metallic substrate, and drying the cathode before the next application.

15. A process according to claim 14, wherein drying is performed in a hot-air oven, with air at a temperature between 150 and 350°C, and a residence time of the substrate of 3 to 12 min.

16. A process according to claim 14 or 15, wherein the application of activating solution is repeated 5 to 15 times.

17. A process according to any one of claims 11 to 16, wherein said step d) of a final thermal treatment is carried out in a hot-air oven, at a temperature between 250 and 400 °C and with a treatment time of 1 to 2 hours.
